# EUROPEAN PATENT SPECIFICATION

(11) **EP 4 035 577 B1**
(45) Date of publication and mention of the grant of the patent: **08.07.2026**
(21) Application number: 20876918.2
(22) Date of filing: 01.09.2020
(51) Int. Cl.: A47J 37/06, F24C 15/20, A47J 37/07

(54) **COOKING APPLIANCE**
KOCHGERÄT
APPAREIL DE CUISSON

(30) Priority: 16.10.2019 CN 201910986981
(43) Date of publication of application: 03.08.2022
(73) Proprietor: Guangdong Midea Consumer Electric Manufacturing Co., Ltd., Shunde Foshan, Guangdong 528311 (CN)
(72) Inventor: CHRISTOPHER, Burton, Guangdong 528311 (CN)
(74) Representative: Whitlock, Holly Elizabeth Ann
(86) International application number: PCT/CN2020/112873
(87) International publication number: WO 2021/073297

(56) References cited:
- WO-A1-2004/008927
- CN-A- 108 497 942
- CN-U- 206 959 002
- CN-U- 208 491 831
- CN-U- 208 709 593
- CN-U- 208 909 888
- JP-A- 2002 317 947
- KR-A- 20180 004 483
- TW-U- 347 853
- US-A- 4 648 378
- US-A- 4 827 903
- US-A- 4 827 903
- US-B2- 9 612 022

## Description

### TECHNICAL FIELD

The present application relates to the technical field of household appliances, in particular to a cooking utensil according to the preamble of claim 1.

### BACKGROUND

In some cooking utensils, some can bring baking flavor to food due to their barbecue function, thus they are favored by users. However, when using the barbecue function, this cooking utensil often discharges a large amount of oil fume, generally, the oil fume is discharged directly, which not only pollutes the environment, but also affects the health of users.

The above contents are only used to assist in understanding the technical solution of the present application, and do not mean to recognize that the above contents are prior art.

US 9 612022 B2 refers to a teppanyaki assembly comprising a platform having a cooking plane, an air pump disposed in the platform, and an air filter connected to the air pump. The air pump has an air channel defined on the side of the cooking plane and a covering disposed on the air channel. Air and oil fumes are drawn into the covering above the cooking plane and into the air channel. The air channel also defines a cleaning channel relative to the water inlet for a fluid to travel there along. The air filter has a housing connecting to the air channel and provided with an air room defined therein and the filter screen slantwise disposed within the air room. The housing has a wind outlet and a water outlet at the bottom. The air room is divided by the filter screen into a collecting area and a filtered area. The collecting area is adapted to communicate with the air channel and the filtered area is adapted to communicate with the wind outlet. The wind outlet is adapted to communicate with the filter device for removing oil fumes. The collection of oil dripping from the cooking plane is not mentioned.

A Cooking utensil according to the preamble of claim 1 is known from US 4 827 903 A that refers to a barbecue cooker or roaster having a cooker body defining the space and a grease tray housing under the space. The grill is supported in a grease pan so that grill is flush with a top of grease pan. The grease pan has two troughs, defined by greasepan bottom and ramps. The two troughs are separated by a burner slot. Burner cover forms a roof over burner slot. The two troughs collect grease that drips or sputters from food being cooked on grill. Greasepan is equipped with two handles which facilitate its swift removal from the top of the barbeque cooker. Grease pan is supported by a grease pan support box. The support box prevents entry of smoke or grease from the bottom of space into the interior of the box and likewise, it prevents exist of grease or air from that box into the bottom of space. Two smoke passages are formed between either side of grease pan support box and cooker body. Underneath the support box is an inclined surface that this part of cooker body and which forms the bottom of space. Surface is inclined in order to put grease accumulations to slide down into filter aperture designed to receive filter . Smoke passing beneath the support box is required to exist through filter. A filter grease tray slides into grease tray housing. The grease tray collects grease dripping from filter. Smoke that rises from grill and grill pan is drawn off to the sides by the lower pressure in smoke passages on either side of the support box, then down through the smoke passages to that portion of space which is under the support box, then through filter into grease tray housing and out through exhaust aperture coupling toward the exhaust means which creates the vacuum which operates the smoke collection system.

### SUMMARY

Aspects of the invention are set out in the claims. In the following, each of the described methods, apparatuses, embodiments, examples, and aspects, which do not fully correspond to the invention as defined in the claims is thus not according to the invention and is, as well as the whole following description, present for illustration purposes only or to highlight specific aspects or features of the claims. Embodiments not falling under the scope of the claims should be interpreted as examples useful for understanding the invention. The main purpose of the present application is to provides a cooking utensil, which aims to reduce oil fume emitted during the cooking.
In order to achieve the above purpose, the present application provides a cooking utensil according to claim 1.c

An outer surface of the housing is concave to form the collection chamber and the heating assembly is provided outside the housing and located above the collection chamber. In one embodiment of the present application, the cleaning chamber is provided in the housing.

The housing is provided with a guide inclined plane directly below the heating assembly. In one embodiment of the present application, a bottom of the guide inclined plane is provided with an airflow passing opening that is adapted to communicate the collection chamber with the cleaning chamber.

In one embodiment of the present application, the cleaning chamber is provided with a cleaning disc for containing cleaning liquid.

In one embodiment of the present application, the cleaning disc is provided at a bottom of the cleaning chamber and below the airflow passing opening.

In one embodiment of the present application, the housing is convex with a smoke guide part on a housing wall of the cleaning chamber and opposite to the cleaning disc, and an air passage is provided between the smoke guide part and the cleaning disc.

In one embodiment of the present application, a housing wall of the housing is provided with an air outlet hole that is adapted to communicate with the discharge chamber such that oil fume cleaned by the cleaning chamber passes through the discharge chamber and is discharged to ouside from the air outlet hole.

In one embodiment of the present application, the discharge chamber is located at a side of the cleaning chamber, and the air outlet hole that is adapted to communicate with a side of the discharge chamber away from the cleaning chamber.

In one embodiment of the present application, a filter is provided at a joint between the cleaning chamber and the discharge chamber.

In one embodiment of the present application, the discharge chamber is detachably connected with an exhaust fan.

In one embodiment of the present application, the exhaust fan is provided at a bottom of the discharge chamber and adjacent to the filter.

In one embodiment of the present application, the housing comprises an oil collection housing and a cleaning housing detachably connected with the oil collection housing; the heating assembly is provided in the oil collection housing; the oil collection housing is provided with the collection chamber, and the cleaning housing is provided with the cleaning chamber.

In one embodiment of the present application, the oil collection housing is provided with a mounting platform above the collection chamber, and the heating assembly is mounted on the mounting platform.

In one embodiment of the present application, the cleaning housing comprises an upper housing and a bottom cover detachably connected with the upper housing, the oil collection housing is detachably connected to the upper housing, and the upper housing and the bottom cover are enclosed to form the cleaning chamber.

In one embodiment of the present application, a contour of the cleaning chamber is of "L" shape.

In one embodiment of the present application, the upper housing and the bottom cover are enclosed to form the discharge chamber.

In one embodiment of the present application, the heating assembly comprises a baking member corresponding to the collection chamber and a heater connected with the baking member; the baking member has a first cooking surface and a second cooking surface opposite to each other, and the baking member is overturnable on the housing to select the first cooking surface or the second cooking surface for cooking.

In one embodiment of the present application, the baking member is provided with an airflow passage that is adapted to communicate with the collection chamber such that external air enters the collection chamber through the airflow passage.

In one embodiment of the present application, the heater is over-molded in the baking member.

In one embodiment of the present application, the cooking utensil further comprises a controller electrically connected to the heating assembly.

In the cooking utensil of the technical solution of the present application, the housing is provided with a collection chamber and a cleaning chamber that are adapted to communicate with each other. Due to the heating component being provided at a position of the housing that is configured to communicate with the collection chamber such that the oil and the oil fume generated by the heating component when cooking can be collected in the collection chamber. The oil fume passes through the cleaning chamber for cleaning to become smokeless gas and then is discharged to the outside to avoid the direct discharge of oil fume, so that the oil fume discharged during cooking is greatly reduced.

### BRIEF DESCRIPTION OF THE DRAWINGS

In order to more clearly explain the embodiments of the present application or the technical solutions in the related art, the following will briefly introduce the drawings in the embodiments or the description of the related art. It is obvious that the drawings in the following description are only some embodiments of the present application. For those skilled in the art, other drawings can be obtained according to the structure shown in these drawings without paying creative labor.

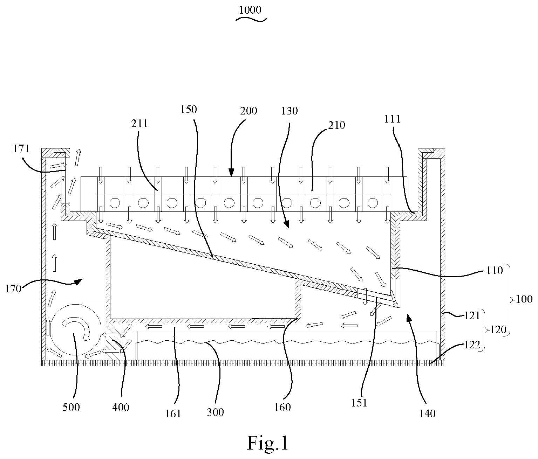

Fig. 1 is a schematic cross-sectional view of an embodiment of a cooking utensil of the present application.

### Description of attached drawing label:

| label | name | label | name |
|---|---|---|---|
| 1000 | cooking utensil | 100 | housing |
| 110 | oil collection housing | 111 | mounting platform |
| 120 | cleaning housing | 121 | upper housing |
| 122 | bottom cover | 130 | collection chamber |
| 140 | cleaning chamber | 150 | guide inclined plane |
| 151 | airflow passing opening | 160 | smoke guide part |
| 161 | air passage | 170 | discharge chamber |
| 171 | air outlet hole | 200 | heating assembly |
| 300 | cleaning disc | 400 | filter |
| 500 | air discharge fan | 210 | baking member |
| 211 | airflow passage | | |

The realization of the purpose, functional features and advantages of the present application will be further described with reference to the attached drawings in combination with the embodiments.

### DETAILED DESCRIPTION OF THE EMBODIMENTS

The technical solution in the embodiment of the present application will be clearly and completely described below in combination with the attached drawings in the embodiment of the present application. Obviously, the described embodiments are only part of the embodiments of the present application, not all of the embodiments.

It should be noted that all directional indications (such as up, down, left, right, front, back...) in the embodiment of the present application are only used to explain the relative position relationship and movement among components under a specific attitude (as shown in the attached drawings). If the specific attitude changes, the directional indications will change accordingly.

In the present application, unless otherwise specified and limited, the terms "connection", "fix" and so on should be understood in a broad sense. For example, "fix" can be fixed connection, removable connection or integrated; it can be mechanical connection or electrical connection; it can be directly connected or indirectly connected through an intermediate medium; it can be the connection within two elements or the interaction relationship between two elements, unless otherwise clearly defined. For those skilled in the art, the specific meaning of the above terms in the present application can be understood according to the specific circumstances.

In addition, in the present application, the description of "first", "second" and so on is only for descriptive purposes, and cannot be understood as indicating or implying its relative importance or implicitly indicating the number of indicated technical features. Thus, the features defined with "first" and "second" may include at least one of the features explicitly or implicitly. In addition, the meaning of "and/or" in the full text is that it includes three parallel solutions. Taking "A and/or B" as an example, it includes solution A, solution B, or both solutions A and B. In addition, the technical solutions among various embodiments can be combined with each other.

Referring to Fig. 1, the present application proposes a cooking utensil 1000.

In the embodiment of the present application, the cooking utensil 1000 includes a housing 100 and a heating assembly 200. The housing 100 is provided with a collection chamber 130 and a cleaning chamber 140 that is adapted to communicate with the collection chamber 130. The heating assembly 200 is provided in the housing 100 and corresponds to the collection chamber 130. The collection chamber 130 collects the oil fume generated by the heating assembly 200, and then the oil fume is cleaned by the cleaning chamber 140 and discharged to the outside.

The cooking utensil 1000 of the present application can be used for cooking such as baking and frying food. The housing 100 mainly provides support and protection for the heating assembly 200 and other components of the cooking utensil 1000. Various shapes can be designed for the housing 100 according to the actual needs, such as a square shape, a cylindrical shape, or another reasonable and effective shape. The heating assembly 200 may be a component for heating food by integrating a heater with such as a grill or a baking pan, and can provide high temperature for cooking food.

In this embodiment, the collection chamber 130 is located above the cleaning chamber 140, so that the oil fume generated during cooking can be collected by the collection chamber 130 through controlling the airflow, and then the oil fume flows into the cleaning chamber 140 relatively below for cleaning, so as to avoid to directly flow out from above.

In an embodiment of the present application, the heating assembly 200 includes a baking member 210 corresponding to the collection chamber 130 and a heater (not shown) connected with the baking member 210. The baking member 210 has a first cooking surface and a second cooking surface opposite to each other, and the baking member 210 is capable of being turned over on the housing to select the first cooking surface or the second cooking surface.

Specifically, the baking member 210 can be a baking pan or a grill, which mainly provides a carrier for the food to be cooked. The heater can be a heating wire or a heating sheet, etc.. After the heater is powered on, heat is generated and transmitted to the baking member 210, so that the baking member 210 generates high temperature for cooking. In a practical application, the two opposite sides of the baking member 210 can be mounted on the housing 100 through a rotating shaft, so as to drive the baking member 210 to turn over by rotating the rotating shaft. For example, when baking with a baking pan, the first cooking surface and the second cooking surface can be provided on the front and back sides of the baking pan respectively, and the baking pan is rotatably connected with the housing 100 through two rotating shafts, such that the baking pan can be supported by the two rotating shafts, so that the baking pan can be balanced after being turned over. Since the first cooking surface and the second cooking surface can be used through turning over, the user can flexibly select the cooking surface according to the actual situation, which is more convenient to use.

In this embodiment, the heater is over-molded in the baking member 210, so that the heater and the baking member 210 form an integrated structure, which is convenient for processing. In addition, the heater located inside the baking member 210 can transmit heat evenly to the first cooking surface and the second cooking surface, thereby taking into account the cooking performances of the two cooking surfaces at the same time.

In another embodiment of the present application, the baking member 210 is provided with an airflow passage 211 that is adapted to communicate with the collection chamber 130 to allow external air to enter the collection chamber 130 through the airflow passage 211. In this embodiment, the oil fume generated during cooking can be collected in the collection chamber 130 driven by the fresh air entering the airflow passage 211, and the oil fume flows to the cleaning chamber 140 for cleaning. Therefore, due to the airflow passage 211, the fluidity of the airflow in the collection chamber 130 and the cleaning chamber 140 is increased, so as to improve the efficiency of processing oil fume.

Therefore, in the technical solution of the present application, the heating assembly 200 is provided at a position of the housing 100 corresponding to the collection chamber 130, such that the oil fume generated in the cooking of the heating assembly 200 can be collected in the collection chamber 130. The oil fume is cleaned by the cleaning chamber 140 to become fumeless gas and then discharged to the outside to avoid direct discharge of oil fume, thereby greatly reducing the discharge of the oil fume during cooking.

In an embodiment of the present application, the outer surface of the housing 100 is concave to form a collection chamber 130, the cleaning chamber 140 is provided in the housing 100, and the heating assembly 200 is provided outside the housing 100 and above the collection chamber 130. In this embodiment, the heating assembly 200 and the collection chamber 130 are distributed along an up-down direction outside the housing 100, so that the oil fume generated in the cooking of the heating assembly 200 above can be collected in the collection chamber 130 below by controlling the airflow direction. The oil fume is cleaned in the cleaning chamber 140 and then discharged, so as to reduce the discharge of the oil fume during cooking.

Of course, in other embodiments, the collection chamber 130 can also be provided inside the housing 100, so that the oil fume generated by the heating assembly 200 when cooking is directly collected in the housing 100 for processing and then discharged to the outside.

In fact, since the heating assembly 200 will produce oil during cooking, these oil are easy to form oil fume again after being subjected to high temperature, and these oil remain on a housing wall below the heating assembly 200, which also brings difficulties for cleaning the cooking utensil 1000.

In order to facilitate the collection and guidance of oil and oil fume generated in the cooking of the heating assembly 200, in an embodiment of the present application, the housing 100 is provided with a guide inclined plane 150 directly below the heating assembly 200, and a bottom of the guide inclined plane 150 is provided with an airflow passing opening 151 that is adapted to communicate the collection chamber 130 with the cleaning chamber 140. Due to the guide inclined plane 150, on the one hand, the oil fume generated during cooking can enter the cleaning chamber 140 along the guide inclined plane 150 and the airflow passing opening 151 for cleaning to avoid direct being discharged; on the other hand, the oil remaining on the housing wall of the housing 100 during cooking can be guided by the guide inclined plane 150 to pass through the airflow passing opening 151 and then collected in the cleaning chamber 140 for centralized processing, so as to avoid remaining oil and secondary oil fume caused by high temperature. At the same time, the oil remaining in the housing 100 is collected, which also makes the housing 100 cleaner and convenient for users to clean.

In some embodiments of the present application, the cleaning chamber 140 is provided with a cleaning disc 300 for holding cleaning liquid. Specifically, the cleaning disc 300 can be provided at a bottom of the cleaning chamber 140, and the cleaning disc 300 corresponds to the airflow passing opening 151, so that the oil flowing out of the airflow passing opening 151 can be collected in the cleaning disc 300. The cleaning liquid can be a liquid formed of water and oil. In fact, when the oil fume in the collection chamber 130 enters the cleaning chamber 140, it can enter the cleaning disc 300. The cleaning liquid in the cleaning disc 300 and the substances in the oil fume are mutually dissolved due to the rule of the likes dissolve each other, so that the water-soluble substances and oil-soluble substances in the oil fume are dissolved by the cleaning liquid. Therefore, when cleaned by the cleaning disc 300, the oil fume becomes a relatively clean gas and is discharged to the outside, which will not pollute the environment and affect the user's health.

Further, in order to enable the oil fume in the cleaning chamber 140 to flow through the cleaning disc 300 and be discharged, the housing wall of the cleaning chamber 140 in the housing 100 of the present application is convex with a smoke guide part 160 opposite to the cleaning disc 300, and an air passage 161 is provided between the smoke guide part 160 and the cleaning disc 300. In this way, a space of the air passage 161 is reduced due to the providing of the smoke guide 160, so that the oil fume is forced to enter the cleaning disc 300 for dissolution before being discharged after flowing through the cleaning chamber 140. Therefore, the residence time of the oil fume in the cleaning disc 300 is greatly increased, and the oil fume is dissolved more thoroughly.

In an embodiment of the present application, the housing 100 is also provided with a discharge chamber 170 that is adapted to communicate with the cleaning chamber 140, the housing wall of the housing 100 is provided with an air outlet hole 171 that is adapted to communicate with the discharge chamber 170, and the air cleaned by the cleaning chamber 140 passes through the discharge chamber 170 and is discharged to the outside through the air outlet hole 171. In this embodiment, the discharge chamber 170 is located on the side of the cleaning chamber 140, and the air outlet hole 171 is adapted to communicate with the side of the discharge chamber 170 away from the cleaning chamber 140, so that the airflow path passing through the cleaning chamber 140 and the discharge chamber 170 has a "L" shape. Due to the discharge chamber 170, the oil fume generated in the cooking of the heating assembly 200 enters the housing 100 for cleaning, and then the clean gas is discharged from the air outlet hole 171, so as to prevent the oil fume from being directly discharged to the outside.

Further, a filter 400 is provide at a joint between the cleaning chamber 140 and the discharge chamber 170 of the present application. The filter 400 can be composed of filter materials, such as glass fiber filter materials, which filter the oil fume using the fabric filtration method, or the filter 400 is provided with activated carbon to filter using the activated carbon adsorption method. Before being discharged, the oil fume cleaned by the cleaning chamber 140 is filtered by the filter 400 again, so that the oil fume is filtered more comprehensively and the gas discharged to the outside through the discharge chamber 170 is cleaner.

Specifically, the filter 400 can be detachably blocked at the joint between the cleaning chamber 140 and the discharge chamber 170. For example, the filter 400 can be detachably connected by a screw connection and a snap connection. In this way, after long-term use, the filter 400 can be disassembled for cleaning, or being changed or the like, to ensure the filtering effect of the filter 400. The filter 400 is positioned between the cleaning chamber 140 and the discharge chamber 170, and there is no gap between the filter 400 and the housing 100, so that all the oil fume can be filtered by the filter 400 and then be discharged, so that the filtering effect is better.

Further, in order to increase the flow rate of airflow in the housing 100, the discharge chamber 170 of the present application is provided with an exhaust fan 500 detachably connected. Specifically, the exhaust fan 500 is provided at a bottom of the discharge chamber 170 and adjacent to the filter 400. The detachable exhaust fan 500 can be disassembled for cleaning, being changed, or the like, after long-term use, so as to ensure good exhaust effect of the exhaust fan 500. Moreover, due to the exhaust fan 500, on the one hand, the exhaust fan 500 can drive the oil fume in the collection chamber 130 to quickly enter the cleaning chamber 140 for cleaning; on the other hand, it can also drive the cleaned airflow to pass through the discharge chamber and quickly discharge from the air outlet hole 171, so that the collection rate, the cleaning rate and the discharge rate of the oil fume can be increased. In addition, the exhaust fan 500 also increases the flow rate of the airflow near the heating assembly 200, thereby accelerating the exchange rate of heat of the food to be cooked in the heating assembly 200, so as to enhance the efficiency of heating food.

In some embodiments of the present application, the housing 100 includes an oil collection housing 110 and a cleaning housing 120 detachably connected with the oil collection housing 110; the heating assembly 200 is provided in the oil collection housing 110, the oil collection housing 110 is provided with a collection chamber 130; the cleaning chamber 140 is provided in the cleaning housing 120. The oil collection housing 110 is used to collect the oil and smoke generated in the cooking of the heating assembly 200. The oil collection housing 110 is detachably connected with the cleaning housing 120, so that the collection chamber 130 and the cleaning chamber 140 can be cleaned conveniently. At the same time, the oil collection housing 110 is recessed to form the collection chamber 130 and the cleaning chamber 140 is provided in the cleaning housing 120, and then the two are assembled together, in such a way, the manufacturing process is relatively simple and the production efficiency can be improved.

Of course, in another embodiment, the oil collection housing 110 and the cleaning housing 120 can also form an integrated structure, so that the connection between the oil collection housing 110 and the cleaning housing 120 is stable and firm.

In one embodiment, the oil collection housing 110 has a mounting platform 111 above the collection chamber 130, and the heating assembly 200 is mounted on the mounting platform 111. The mounting platform 111 can be formed by bending the housing wall of the oil collection housing 100. In this embodiment, there are provided two mounting platforms 111, which are symmetrically provided on opposite sides of the oil collection housing 110, such that the mounting parts on both sides of the heating assembly 200 can be mounted on the two mounting platforms 111, and the heating assembly 200 can be balanced and has a good stability after the mounting, thereby making the heat conduction efficiency of the heating assembly 200 better, the conduction temperature of the heating assembly 200 uniform, and the cooked food more delicious.

Further, in an embodiment of the present application, the cleaning housing 120 includes an upper housing 121 and a bottom cover 122 detachably connected with the upper housing 121, the oil collection housing 110 is detachably connected to the upper housing 121, and the upper housing 121 and the bottom cover 122 are enclosed to form the cleaning chamber 140. Specifically, a contour of the cleaning chamber 140 enclosed by the upper housing 121 and the bottom cover 122 is of an "L" shape, so that the collection chamber 130 has a long flow path after entering the cleaning chamber 140, the residence time of the oil fume in the cleaning chamber 140 is increased, and then the probability of the oil fume contacting the cleaning disc 300 and being dissolved is increased, thereby the oil fume is dissolved more cleanly.

In this embodiment, the discharge chamber 170 is formed by the enclosure of the upper housing 121 and the bottom cover 122, and the contour of the discharge chamber 170 is of a long strip. Therefore, when disassembling the upper housing 121 and the bottom cover 122, the cleaning chamber 140 and the discharge chamber 170 can be cleaned, and the cleaning is more convenient. At the same time, due to the detachable connection of upper housing 121 and bottom cover 122, the cleaning housing 120 can be formed by manufacturing each part individually and then assembling the parts together, which makes the manufacturing simpler and improves the production efficiency.

In the embodiment of the present application, the cooking utensil 1000 also includes a controller electrically connected to the heating assembly 200. Specifically, the controller is electrically connected to the heating assembly 200 and the exhaust fan 500. Therefore, in the practical application, when the controller controls the heating assembly 200 to start cooking, it can also control the exhaust fan 500 synchronously, so as to remove the oil fume generated by cooking and the oil fume is cleaned, so that the airflow discharged to the outside will not have oil fume, thereby ensuring that the airflow discharged to the outside remains fresh and clean.

## Claims

1. A cooking utensil (1000) comprising:
a housing (100) provided with a collection chamber (130), a cleaning chamber (140) and a discharge chamber (170); and
a heating assembly (200) provided outside the housing (100) and located above the collection chamber (130), wherein an outer surface of the housing (100) is concave to form the collection chamber (130), the housing (100) is provided with a guide inclined plane (150) directly below the heating assembly (200), the heating assembly (200) is configured to communicate with the collection chamber (130) such that the collection chamber (130) collects oil and oil fume generated by the heating assembly (200) from below the heating assembly (200), the guide inclined plane (150) collects and guides oil and oil fume generated by the heating assembly (200), the collection chamber (130) is configured to communicate with the cleaning chamber (140) such that oil and oil fume are transferred to the cleaning chamber (140) for collecting oil and cleaning oil fume, the cleaning chamber (140) is configured to communicate with the discharge chamber (170) such that cleaned oil fume is transferred to the discharge chamber (170) and the discharge chamber (170) is configured to discharge cleaned air or gas therefrom to outside;
wherein the cleaning chamber (140) is provided in the housing (100); wherein a bottom of the guide inclined plane (150) is provided with an airflow passing opening (151) that is adapted to communicate the collection chamber (130) with the cleaning chamber (140); and wherein a housing wall of the housing (100) is provided with an air outlet hole (171) that is adapted to communicate with the discharge chamber (170) such that oil fume cleaned by the cleaning chamber (140) passes through the discharge chamber (170) and is discharged to outside from the air outlet hole (171).

2. The cooking utensil (1000) according to claim 1, wherein the cleaning chamber (140) is provided with a cleaning disc (300) for containing cleaning liquid.

3. The cooking utensil (1000) according to claim 2, wherein the cleaning disc (300) is provided at a bottom of the cleaning chamber (140) and next to the airflow passing opening (151).

4. The cooking utensil (1000) according to claim 2, wherein the housing (100) is convex with a smoke guide part (160) on a housing (100) wall of the cleaning chamber (140) and opposite to the cleaning disc (300), and an air passage (161) is provided between the smoke guide part (160) and the cleaning disc (300).

5. The cooking utensil (1000) according to claim 1, wherein the discharge chamber (170) is located at a side of the cleaning chamber (140), and the air outlet hole (171) is adapted to communicate with a side of the discharge chamber (170) away from the cleaning chamber (140); or
wherein a filter (400) is provided at a joint between the cleaning chamber (140) and the discharge chamber (170); or
wherein the discharge chamber (170) is detachably connected with an exhaust fan (500), which is provided at a bottom of the discharge chamber (170) and adjacent to the filter (400).

6. The cooking utensil (1000) according to any one of claims 1 to 4, wherein the housing (100) comprises an oil collection housing (100) and a cleaning housing (100) detachably connected with the oil collection housing (100); the heating assembly (200) is provided in the oil collection housing (100); the oil collection housing (100) is provided with the collection chamber (130), and the cleaning housing (100) is provided with the cleaning chamber (140).

7. The cooking utensil (1000) according to claim 6, wherein the oil collection housing (100) is provided with a mounting platform (111) above the collection chamber (130), and the heating assembly (200) is mounted on the mounting platform (111).

8. The cooking utensil (1000) according to claim 6, wherein the cleaning housing (100) comprises an upper housing (100) and a bottom cover (122) detachably connected with the upper housing (100), the oil collection housing (100) is detachably connected to the upper housing (100), and the upper housing (100) and the bottom cover (122) are enclosed to form the cleaning chamber (140).

9. The cooking utensil (1000) according to claim 8, wherein a contour of the cleaning chamber (140) is of an "L" shape; or
wherein the upper housing (100) and the bottom cover (122) are enclosed to form the discharge chamber (170).

10. The cooking utensil (1000) according to any one of claims 1 to 4, wherein the heating assembly (200) comprises a baking member corresponding to the collection chamber (130) and a heater connected with the baking member; the baking member has a first cooking surface and a second cooking surface opposite to each other, and the baking member is overturnable on the housing (100) to select the first cooking surface or the second cooking surface for cooking.

11. The cooking utensil (1000) according to claim 10, wherein the baking member is provided with an airflow passage (211) that is adapted to communicate with the collection chamber (130) such that external air enters the collection chamber (130) through the airflow passage (211); or
wherein the heater is over-molded in the baking member.

12. The cooking utensil (1000) according to any one of claims 1 to 4, wherein the cooking utensil (1000) further comprises a controller electrically connected to the heating assembly (200).

## Patentansprüche

1. Gargerät (1000), umfassend:
ein Gehäuse (100), das mit einer Sammelkammer (130), einer Reinigungskammer (140) und einer Ablasskammer (170) versehen ist, und
eine Heizanordnung (200), die außerhalb des Gehäuses (100) bereitgestellt ist und sich über der Sammelkammer (130) befindet,
wobei eine Außenfläche des Gehäuses (100) konkav ist, um die Sammelkammer (130) zu bilden, das Gehäuse (100) mit einer geneigten Führungsebene (150) direkt unter der Heizanordnung (200) versehen ist, die Heizanordnung (200) dafür gestaltet ist, mit der Sammelkammer (130) derart in Verbindung zu stehen, dass die Sammelkammer (130) Öl und Öldunst, der durch die Heizanordnung (200) erzeugt wird, von unterhalb der Heizanordnung (200) sammelt, die geneigte Führungsebene (150) Öl und Öldunst, der durch die Heizanordnung (200) erzeugt wird, sammelt und führt, die Sammelkammer (130) dafür gestaltet ist, mit der Reinigungskammer (140) derart in Verbindung zu stehen, dass Öl und Öldunst zur Reinigungskammer (140) überführt werden, um Öl zu sammeln und Öldunst zu reinigen, wobei die Reinigungskammer (140) dafür gestaltet ist, mit der Ablasskammer (170) derart in Verbindung zu stehen, dass gereinigter Öldunst zur Ablasskammer (170) überführt wird, und die Ablasskammer (170) dafür gestaltet ist, gereinigte Luft oder Gas daraus nach außen abzulassen,
wobei die Reinigungskammer (140) in dem Gehäuse (100) bereitgestellt ist, wobei ein Boden der geneigten Führungsebene (150) mit einer Luftstrom-Durchlassöffnung (151) versehen ist, die dafür eingerichtet ist, die Sammelkammer (130) mit der Reinigungskammer (140) in Verbindung zu bringen, und wobei eine Gehäusewand des Gehäuses (100) mit einem Luftauslassloch (171) versehen ist, das dafür eingerichtet ist, mit der Ablasskammer (170) derart in Verbindung zu stehen, dass Öldunst, der durch die Reinigungskammer (140) gereinigt wird, durch die Ablasskammer (170) gelangt und aus dem Luftauslassloch (171) nach außen abgelassen wird.

2. Gargerät (1000) nach Anspruch 1, wobei die Reinigungskammer (140) mit einer Reinigungsplatte (300) zum Aufnehmen von Reinigungsflüssigkeit versehen ist.

3. Gargerät (1000) nach Anspruch 2, wobei die Reinigungsplatte (300) an einem Boden der Reinigungskammer (140) und neben der Luftstrom-Durchlassöffnung (151) bereitgestellt ist.

4. Gargerät (1000) nach Anspruch 2, wobei das Gehäuse (100) konvex mit einem Rauchführungsteil (160) an einer Wand des Gehäuses (100) der Reinigungskammer (140) ist und gegenüber der Reinigungsplatte (300) liegt und ein Luftdurchlass (161) zwischen dem Rauchführungsteil (160) und der Reinigungsplatte (300) bereitgestellt ist.

5. Gargerät (1000) nach Anspruch 1, wobei sich die Ablasskammer (170) an einer Seite der Reinigungskammer (140) befindet und das Luftauslassloch (171) dafür eingerichtet ist, mit einer Seite der Ablasskammer (170) entfernt von der Reinigungskammer (140) in Verbindung zu stehen, oder
wobei an einer Verbindungsstelle zwischen der Reinigungskammer (140) und der Ablasskammer (170) ein Filter (400) bereitgestellt ist, oder
wobei die Ablasskammer (170) lösbar mit einem Abluftgebläse (500) verbunden ist, das an einem Boden der Ablasskammer (170) und angrenzend an den Filter (400) bereitgestellt ist.

6. Gargerät (1000) nach einem der Ansprüche 1 bis 4, wobei das Gehäuse (100) ein Ölsammelgehäuse (100) und ein Reinigungsgehäuse (100), das lösbar mit dem Ölsammelgehäuse (100) verbunden ist, umfasst, die Heizanordnung (200) in dem Ölsammelgehäuse (100) bereitgestellt ist, das Ölsammelgehäuse (100) mit der Sammelkammer (130) versehen ist und das Reinigungsgehäuse (100) mit der Reinigungskammer (140) versehen ist.

7. Gargerät (1000) nach Anspruch 6, wobei das Ölsammelgehäuse (100) mit einer Montageplattform (111) über der Sammelkammer (130) versehen ist und die Heizanordnung (200) an die Montageplattform (111) montiert ist.

8. Gargerät (1000) nach Anspruch 6, wobei das Reinigungsgehäuse (100) ein oberes Gehäuse (100) und eine untere Abdeckung (122), die lösbar mit dem oberen Gehäuse (100) verbunden ist, umfasst, das Ölsammelgehäuse (100) lösbar mit dem oberen Gehäuse (100) verbunden ist und das obere Gehäuse (100) und die untere Abdeckung (122) geschlossen sind, um die Reinigungskammer (140) zu bilden.

9. Gargerät (1000) nach Anspruch 8, wobei ein Umriss der Reinigungskammer (140) eine L-Form aufweist, oder
wobei das obere Gehäuse (100) und die untere Abdeckung (122) geschlossen sind, um die Ablasskammer (170) zu bilden.

10. Gargerät (1000) nach einem der Ansprüche 1 bis 4, wobei die Heizanordnung (200) ein Backelement, das der Sammelkammer (130) entspricht, und eine Heizeinheit, die mit dem Backelement verbunden ist, umfasst, wobei das Backelement eine erste Garfläche und ein zweite Garfläche einander gegenüberliegend aufweist und das Backelement an dem Gehäuse (100) umdrehbar ist, um die erste Garfläche oder die zweite Garfläche zum Garen auszuwählen.

11. Gargerät (1000) nach Anspruch 10, wobei das Backelement mit einem Luftstromdurchlass (211) versehen ist, der dafür eingerichtet ist, mit der Sammelkammer (130) derart in Verbindung zu stehen, dass Außenluft durch den Luftstromdurchlass (211) in die Sammelkammer (130) eintritt, oder
wobei das Heizelement in dem Backelement umspritzt ist.

12. Gargerät (1000) nach einem der Ansprüche 1 bis 4, wobei das Gargerät (1000) ferner eine Steuerung umfasst, die elektrisch mit der Heizanordnung (200) verbunden ist.

## Revendications

1. Appareil de cuisson (1000), comportant :
un boîtier (100) doté d'une chambre de collecte (130), d'une chambre de nettoyage (140) et d'une chambre de décharge (170) ; et
un ensemble de chauffage (200) mis en œuvre à l'extérieur du boîtier (100) et situé au-dessus de la chambre de collecte (130), dans lequel une surface extérieure du boîtier (100) est concave pour former la chambre de collecte (130), le boîtier (100) est doté d'un plan incliné de guidage (150) directement en dessous de l'ensemble de chauffage (200), l'ensemble de chauffage (200) est configuré pour communiquer avec la chambre de collecte (130) de telle sorte que la chambre de collecte (130) recueille l'huile et les fumées d'huile générées par l'ensemble de chauffage (200) depuis le dessous de l'ensemble de chauffage (200), le plan incliné de guidage (150) recueille et guide l'huile et les fumées d'huile générées par l'ensemble de chauffage (200), la chambre de collecte (130) est configurée pour communiquer avec la chambre de nettoyage (140) de telle sorte que l'huile et les fumées d'huile sont transférées vers la chambre de nettoyage (140) pour recueillir l'huile et nettoyer les fumées d'huile, la chambre de nettoyage (140) est configurée pour communiquer avec la chambre de décharge (170) de telle sorte que les fumées d'huile nettoyées sont transférées vers la chambre de décharge (170) et la chambre de décharge (170) est configurée pour décharger l'air ou le gaz nettoyé en provenance de celle-ci vers l'extérieur ;
dans lequel la chambre de nettoyage (140) est mise en œuvre dans le boîtier (100) ; dans lequel une partie inférieure du plan incliné de guidage (150) est dotée d'une ouverture de passage d'écoulement d'air (151) qui est adaptée pour faire communiquer la chambre de collecte (130) avec la chambre de nettoyage (140) ; et dans lequel une paroi de boîtier du boîtier (100) est dotée d'un orifice de sortie d'air (171) qui est adapté pour communiquer avec la chambre de décharge (170) de telle sorte que les fumées d'huile nettoyées par la chambre de nettoyage (140) passent au travers de la chambre de décharge (170) et sont déchargées vers l'extérieur par l'orifice de sortie d'air (171).

2. Appareil de cuisson (1000) selon la revendication 1, dans lequel la chambre de nettoyage (140) est dotée d'un disque de nettoyage (300) pour contenir un liquide de nettoyage.

3. Appareil de cuisson (1000) selon la revendication 2, dans lequel le disque de nettoyage (300) est mis en œuvre au niveau d'une partie inférieure de la chambre de nettoyage (140) et à côté de l'ouverture de passage d'écoulement d'air (151).

4. Appareil de cuisson (1000) selon la revendication 2, dans lequel le boîtier (100) est convexe avec une partie de guidage de fumées (160) sur une paroi du boîtier (100) de la chambre de nettoyage (140) et à l'opposé du disque de nettoyage (300), et un passage d'air (161) est mis en œuvre entre la partie de guidage de fumées (160) et le disque de nettoyage (300).

5. Appareil de cuisson (1000) selon la revendication 1, dans lequel la chambre de décharge (170) est située sur un côté de la chambre de nettoyage (140), et l'orifice de sortie d'air (171) est adapté pour communiquer avec un côté de la chambre de décharge (170) à distance de la chambre de nettoyage (140) ; ou
dans lequel un filtre (400) est mis en œuvre au niveau d'un joint entre la chambre de nettoyage (140) et la chambre de décharge (170) ; ou
dans lequel la chambre de décharge (170) est reliée de manière amovible à un ventilateur d'évacuation (500), qui est mis en œuvre au niveau d'une partie inférieure de la chambre de décharge (170) et de manière adjacente par rapport au filtre (400).

6. Appareil de cuisson (1000) selon l'une quelconque des revendications 1 à 4, dans lequel le boîtier (100) comporte un boîtier de collecte d'huile (100) et un boîtier de nettoyage (100) relié de manière amovible au boîtier de collecte d'huile (100) ; l'ensemble de chauffage (200) est mis en œuvre dans le boîtier de collecte d'huile (100) ; le boîtier de collecte d'huile (100) est doté de la chambre de collecte (130), et le boîtier de nettoyage (100) est doté de la chambre de nettoyage (140).

7. Appareil de cuisson (1000) selon la revendication 6, dans lequel le boîtier de collecte d'huile (100) est doté d'une plate-forme de montage (111) au-dessus de la chambre de collecte (130), et l'ensemble de chauffage (200) est monté sur la plate-forme de montage (111).

8. Appareil de cuisson (1000) selon la revendication 6, dans lequel le boîtier de nettoyage (100) comporte un boîtier supérieur (100) et un couvercle inférieur (122) relié de manière amovible au boîtier supérieur (100), le boîtier de collecte d'huile (100) est relié de manière amovible au boîtier supérieur (100), et le boîtier supérieur (100) et le couvercle inférieur (122) sont renfermés pour former la chambre de nettoyage (140).

9. Appareil de cuisson (1000) selon la revendication 8, dans lequel un contour de la chambre de nettoyage (140) est en forme de « L » ; ou
dans lequel le boîtier supérieur (100) et le couvercle inférieur (122) sont renfermés pour former la chambre de décharge (170).

10. Appareil de cuisson (1000) selon l'une quelconque des revendications 1 à 4, dans lequel l'ensemble de chauffage (200) comporte un élément de cuisson au four correspondant à la chambre de collecte (130) et un corps de chauffe relié à l'élément de cuisson au four ;
l'élément de cuisson au four a une première surface de cuisson et une deuxième surface de cuisson opposées l'une de l'autre, et l'élément de cuisson au four est en mesure d'être retourné sur le boîtier (100) pour sélectionner la première surface de cuisson ou la deuxième surface de cuisson pour la cuisson.

11. Appareil de cuisson (1000) selon la revendication 10, dans lequel l'élément de cuisson au four est doté d'un passage d'écoulement d'air (211) qui est adapté pour communiquer avec la chambre de collecte (130) de telle sorte que l'air externe pénètre dans la chambre de collecte (130) au travers du passage d'écoulement d'air (211) ; ou
dans lequel le corps de chauffe est surmoulé dans l'élément de cuisson au four.

12. Appareil de cuisson (1000) selon l'une quelconque des revendications 1 à 4, dans lequel l'appareil de cuisson (1000) comporte par ailleurs un dispositif de commande connecté électriquement à l'ensemble de chauffage (200).
